# EUROPEAN PATENT APPLICATION

(11) **EP 0 887 025 A2**
(43) Date of publication of application: **30.12.1998**
(21) Application number: 98300496.1
(22) Date of filing: 26.01.1998
(51) Int. Cl.: A23N 15/00

(54) **Device for removing the leaves from vegetables**

(30) Priority: 17.04.1997 GB 9707739
(71) Applicant: Rose, David, Boston, Lincolnshire PE20 1LW (GB)
(72) Inventor: Rose, David, Boston, Lincolnshire PE20 1LW (GB)
(74) Representative: Elsworth, Dominic Stephen

(57) **Abstract**

A device for removing leaves from vegetables comprising two rotatably mounted elongate rollers 1, 2, means for rotating the rollers, means 6, 7 for conveying vegetables along the said rollers, and at least one fluid directing means arranged to direct a fluid towards a vegetable being conveyed along the rollers 1, 2 so as to lift and remove leaves from the vegetable, the device further comprising a vegetable retaining means mounted between the said rollers.

## Description

### Field of the Invention

This invention relates to machines for removing leaves from vegetables, and in particular to machines for removing the leaves from cabbages.

### Background to the Invention

When harvested the outer leaves of vegetables such as cabbages often need to be removed due to their being discoloured or damaged. Discoloured and damaged leaves are often slimy making removing them by hand an unpleasant task. However, trimming by hand is the normal method used for preparing vegetables such as cabbages for sale. The normal method of trimming a vegetable such as a cabbage is to cut off the butt thus separating the unwanted leaves from the cabbage. These leaves must then be peeled away from the cabbage.

One device has been proposed to simplify the above task. The device comprises an air jet which is directed at the cabbage, the air from the jet lifting and removing the unwanted cabbage leaves. This device is an improvement on the traditional method for removing unwanted leaves, but does require considerable dexterity on the part of the user since he is required to rotate the cabbage with his hands underneath the air jet so as to remove all the unwanted leaves from the cabbage.

Another known device comprises a conveyor with air jets mounted thereabove. Unfortunately this machine tends to leave many treated cabbages still bearing damaged or discoloured leaves. This is because the cabbages are not presented to the air jet properly so as to obtain an efficient removal of leaves.

However, mechanisation of leaf removal is desirable due to the inefficiency and unpleasantness of removing the leaves by hand. It has been noted that it can take 50 seconds for a worker to remove the damaged or discoloured leaves from a cabbage.

It would therefore be desirable to provide a machine capable of removing the unwanted leaves from a vegetable, particularly a cabbage.

Vegetables are not uniform in size. Cabbages in particular can be divided into three different size categories. The largest of these sizes represents cabbages to be used in food processing, the middle size represents the size of cabbage sold on supermarket shelves, whilst the smallest size is known as mini-cabbage. It would therefore be desirable for a de-leafing machine to be capable of de-leafing a range of different sizes of cabbage.

### Summary of the Invention

A device for removing leaves from vegetables comprising two rotatably mounted elongate rollers, means for rotating the rollers, means for conveying vegetables along the said rollers, and at least one fluid directing means arranged to direct a fluid towards a vegetable being conveyed along the rollers so as to lift and remove leaves from the vegetable.

The surfaces of the rollers may be spaced apart, or alternatively may touch each other.

Preferably, one roller is parallel to the other. The two rollers may be vertically spaced apart. Preferably, the two rollers are horizontally spaced apart. The horizontal distance between the centres of the rollers may be 150mm to 200mm, and is preferably 175 mm. The vertical distance between the centres of the rollers may be 30mm to 60mm, and is preferably 40mm.

The rollers suitably rotate in the same direction. The rollers may rotate at the same speed, or at different speeds, and the rollers may be rotated to produce the same or different surface speeds. By controlling the surface speeds of the rollers, rotation of the vegetable about its vertical axis can be controlled.

Preferably, the conveying means comprises at least one helical protrusion on the surface of at least one of the rollers, and more preferably, at least one helical protrusion on the surface of each of the rollers. The helical protrusion on one of the rollers may be substantially elliptical in cross-section. The helical protrusion on one of the rollers may be substantially circular in cross-section. One or more helical protrusion may be formed from a resilient material, such as rubber. Any suitable attachment means may be used to attach a helical protrusion to a roller.

Preferably, where at least one helical conveying means is provided on both rollers, the paths of each helix differ such that a vegetable placed on the rollers is caused to rotate about its vertical axis, as well as its horizontal axis. Hence the efficacy of the fluid directed towards the vegetable is enhanced.

One of the rollers may be substantially closed. One of the rollers may have openings in its surface, and may be in the form of a squirrel cage. The roller may comprise a plurality of elongate bars connected to end plates, so as to form a roller. Preferably, the roller comprises six bars. By providing one roller which is closed, the lifting effect of the roller having openings in its surface does not lead to the vegetable bouncing.

One roller may be of larger diameter than the other roller. By providing rollers of differing diameters, when the rollers are rotated at the same rate, the surface speed of the rollers will differ.

Preferably the rollers are rotated at a speed which causes a vegetable carried thereon to tumble about its own axis of rotation.

In one embodiment of the invention, a vegetable retaining means is mounted between the two rollers, to prevent a vegetable from falling therebetween. Preferably, the vegetable retaining means is mounted beneath the horizontal centre lines of one or both of the rollers. Advantageously, the vegetable retaining means comprises an elongate member. The elongate member may be circular, polygonal or any suitable shape. Preferably, the elongate member is diamond shaped. Advantageously, the elongate member is essentially of the same length as the rollers. The elongate member may comprise a number of sections, and there may be spaces between adjacent sections. The elongate member may be a bar.

One or more deflectors may be mounted adjacent the rollers to prevent a vegetable falling from the rollers. Preferably, at least one of the deflectors is mounted above the rollers. The or each deflector may be pivotally mounted. The or each deflector may be resiliently biased by biasing means in the direction of the centre of the two spaced apart rollers. Biasing means may comprise at least one spring. One or more of the deflectors may comprise an elongate plate, which may be essentially flat. One or more of the deflectors may comprise a roller, which may be driven.

The fluid directing means may be a jet. A plurality of jets may be arranged to direct a fluid towards a vegetable being conveyed along the rollers so as to lift and remove leaves from the vegetable.

Preferably, the or each jet is mounted such that the angle of incidence of the fluid upon the vegetable may be varied. Where a plurality of jets is provided, the angle of incidence of the fluid upon the vegetable may be varied individually or collectively for each jet. The or each jet may be pivotally mounted. Means to lock the or each jet in a desired position may be provided.

The fluid may be air.

The de-leafing device of the invention provides a particularly efficient and cost-effective means of removing leaves from vegetables. Humans are not required to undertake what is often an unpleasant task. Furthermore, the invention provides a very simple and effective manner to enable vegetables of differing sizes to be de-leafed on the same machine.

### Brief Description of the Drawings

In the drawings which show exemplary embodiments of the invention:
Figure 1 is an end view of a vegetable de-leafing machine according to the invention;
Figure 2 is an end view of the rollers of the de-leafing machine shown in Figure 1;
Figure 3 shows end and side views of roller 1 shown in Figure 1;
Figure 4 shows end and side views of roller 2 shown in Figure 1;
Figure 5 shows end view of the rollers shown in Figure 1 and a side view of the de-leafing machine processing a cabbage;
Figure 6 shows an end view of the rollers shown in Figure 1 and a side view of the de-leafing machine processing a cabbage, the air blowers being at a different angle to that shown in Figure 5; and
Figure 7 is an end view of another embodiment of the vegetable de-leafing machine according to the invention.

### Detailed Description of the Preferred Embodiments

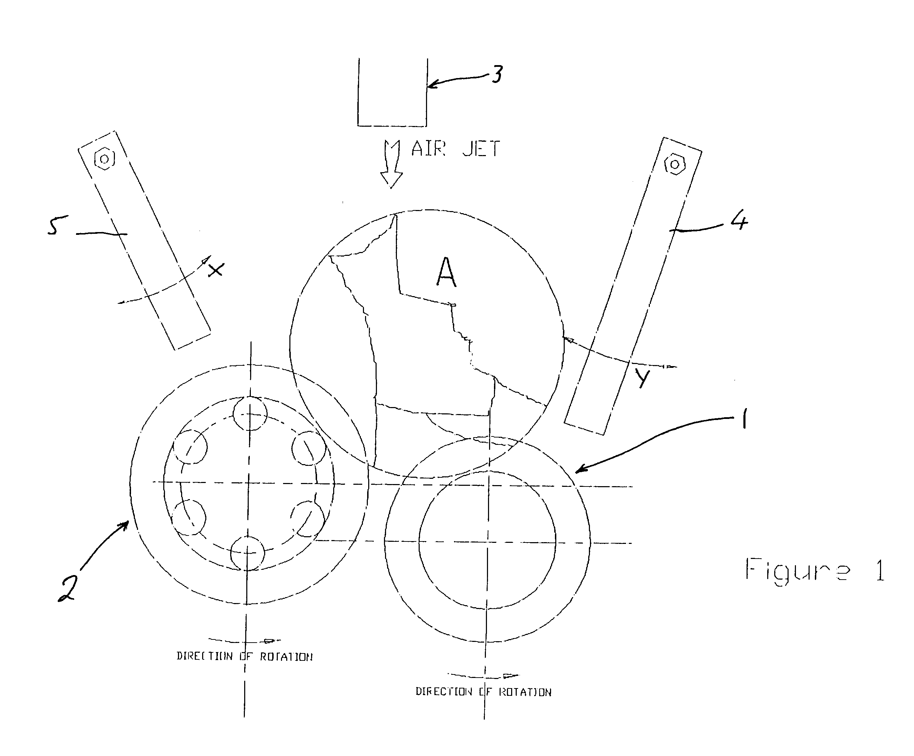

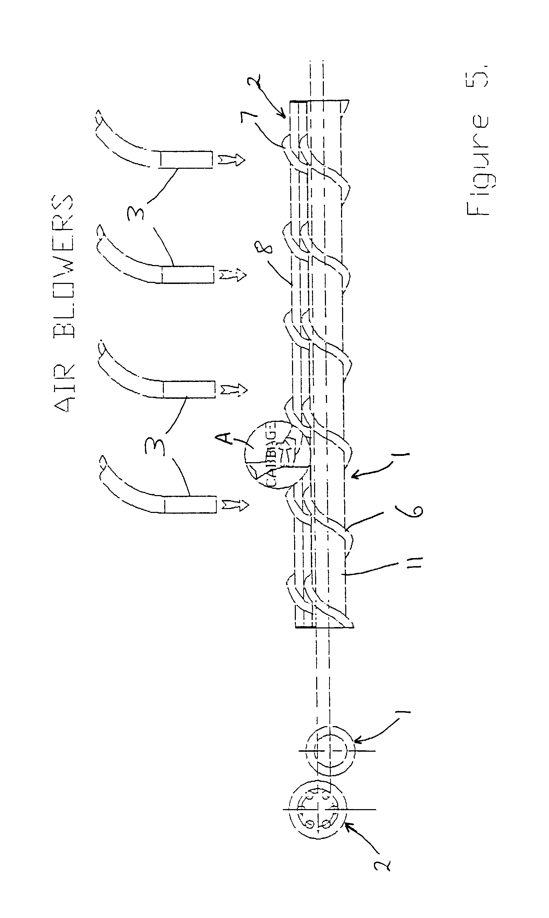

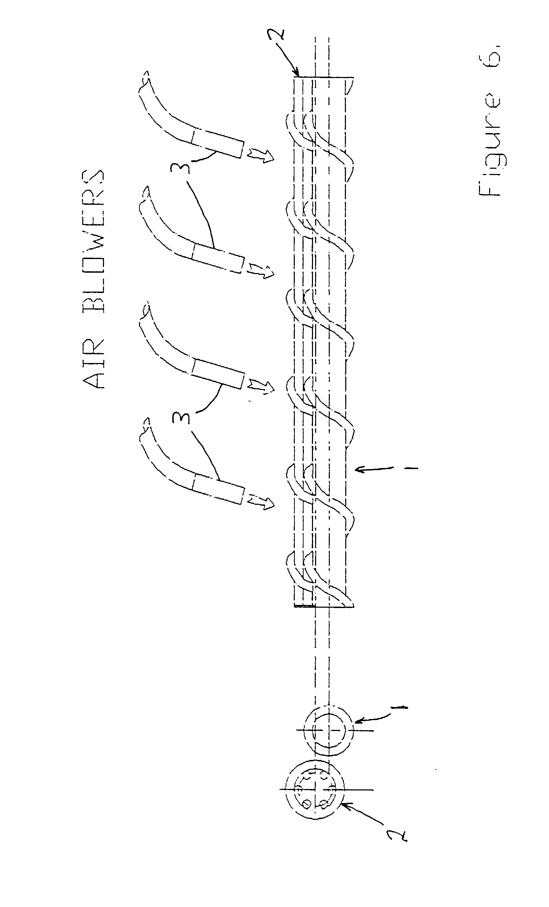

In Figure 1 there is shown a vegetable de-leafing machine according to the invention comprising rollers 1 and 2 (shown in greater detail in Figures 3 and 4), an air jet 3, and deflectors 4 and 5. A cabbage A is shown sitting on the rollers 1 and 2.

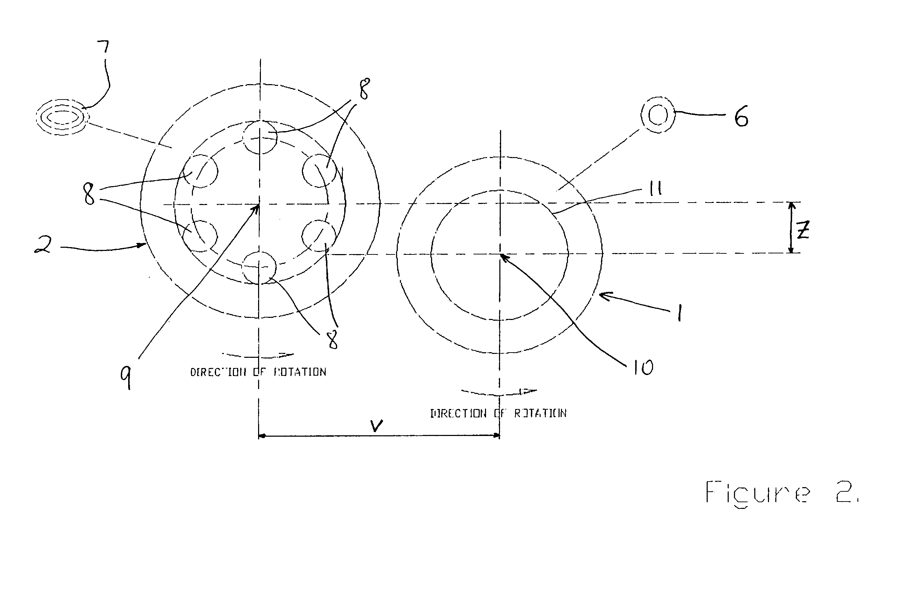

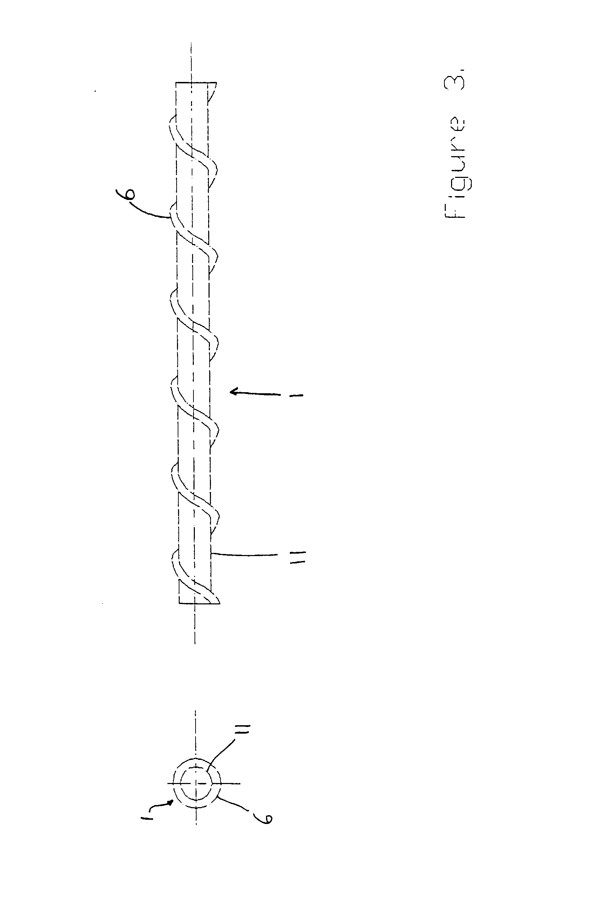

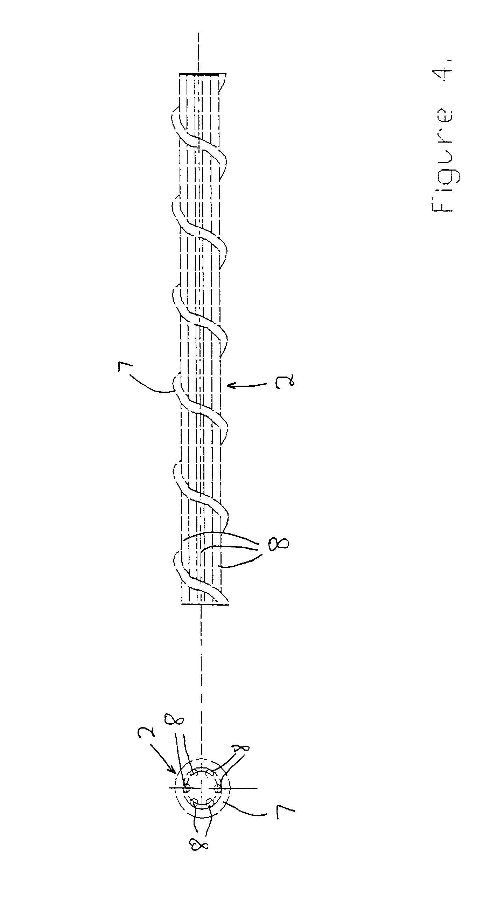

In Figures 2 and 3 it can be seen that roller 1 comprises a tube 11 which has a smooth unbroken surface, and attached to the tube 11 is a second tube 6. Tube 6 is wound around tube 1 so as to form a helix. Tube 6 is attached to tube 1 by any suitable means, e.g. adhesion, welding, mechanical fixing means.

Roller 2 is shown in detail in Figures 2 and 4. Roller 2 comprises a cage roller (often known as a squirrel cage roller) having a plurality of rods 8 attached at to end plates, the end plates not being shown. Around the rods 8 is wound a tube 7. Tube 7 is wound around the rods 8 so as to form a helix. It can be seen from Figure 2 that the tube 7 is elliptical in cross-section.

The centres of rollers 1 and 2 are separated horizontally by a distance v, and vertically by a distance z. The machine may provide for distances v and z to be variable so as to accommodate different sizes of vegetable. The machine may accommodate different sizes of vegetable by movably, e.g. pivotally, mounting one roller relative to the other and providing means to regulate such movement or pivoting, e.g. a threaded spindle. The distances v and z must be such that the vegetable is caused to tumble about its own axis yet not fall either off or through the rollers. In one embodiment of the invention the spacing v is 175mm and the spacing z is 40 mm.

In Figure 5 there is shown a cabbage travelling along rollers 1 and 2. As rollers 1 and 2 rotate, cabbage A is caused to tumble about its own axis. The effect of tubes 6 and 7, each in the form of a helix, is to convey the cabbage A from one end of the machine to the other. As the cabbage is conveyed along the machine, it passes beneath air blowers 3 which direct air onto the said cabbage. The pressure of the air on the surface of the cabbage is sufficient to lift any damaged outer leaves and remove them from the cabbage A. Providing a plurality of air blowers 3, moving the cabbage beneath the air blowers and at the same time rotating the cabbage about its own axis ensures that there is complete removal of unwanted leaves.

The deflectors 4, 5 shown in Figure 1 serve to return the vegetable to the rollers 1, 2, if for any reason the vegetable should fall from the rollers. The deflectors 4, 5 are pivotally mounted and can move in directions y and x respectively. The deflectors 4, 5 are advantageously biased towards the centre of rollers 1, 2.

The deflectors may be biased by resilient means such as one or more springs, e.g. a coil spring.

The invention also provides for the angle of the air blowers to be adjusted. In Figure 5 the air blowers are vertical and arranged to direct air perpendicular to the rollers 1, 2 and hence cabbage A travelling thereon. As can be seen in Figure 6, the air blowers may be angled away from the vertical. By mounting the air blowers 3 in such a manner the effect of the air jet can be varied without adjusting the air pressure provided by the air blowers. As set up in Figure 6, the air blowers will be more effective in lifting leaves from the cabbage because air is being directed under the leaves of the cabbage.

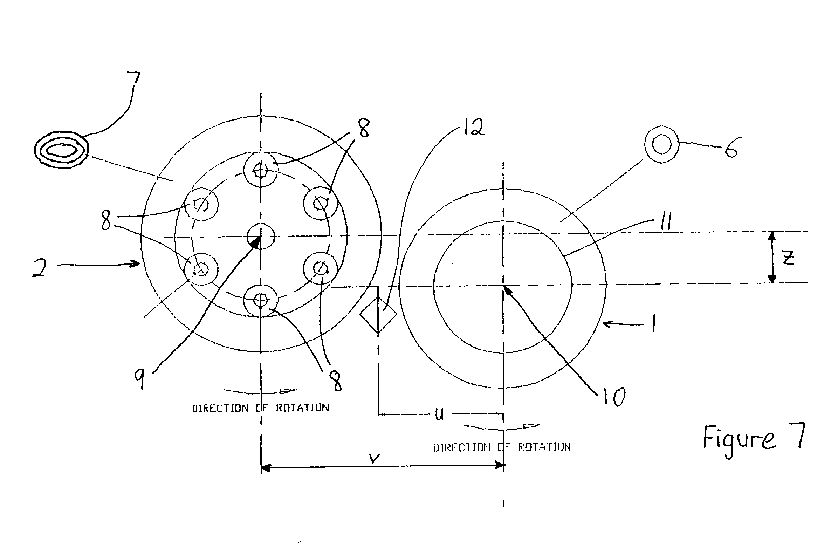

Figure 7 shows another embodiment of the invention. One problem found with the machine shown in Figure 1 is that small vegetables, e.g. mini-cabbage, may fall between the rollers. One skilled in the art will notice that the distance between the surface of tube 11 from the edge of the cage roller depends upon how many of the bars 8 face tube 11. In the embodiment shown there are six bars, and therefore when two of the bars 8 face tube 6 the distance therebetween will be greater than when the roller 2 has rotated so that only one bar 8 faces tube 11. In the embodiment shown, where the distance V is 175mm, the minimum distance between the bars 8 and the tube 11 is 50mm whilst the maximum distance is 57mm. If the maximum distance between the rollers 1 and 2 at any point in the rotation thereof is decreased such that a mini-cabbage will not fall between the rollers then the larger categories of cabbage will fall off the rollers. To provide means for adjusting the distance between the rollers 1 and 2 would be expensive. Furthermore, each time a different size of cabbage was to be de-leafed the machine would have to be adjusted during which time it would not be operational. This downtime would constitute a major cost, since further processes would be held up and labour may be standing idle.

It has been found that the above mentioned problem can be overcome by mounting a vegetable retaining means in the form of a bar 12 between the rollers 1 and 2, and beneath the centres thereof. The bar 12 is set at a horizontal distance U from the centre 10 of roller 1. A distance U of 90mm has been found to be particularly advantageous. In the embodiment shown bar 12 is fixed, although its position may be variable. The provision of bar 12 is a very simple and cost-effective way in which to provide a de-leafing machine capable of treating vegetables of differing sizes.

## Claims

1. A device for removing leaves from vegetables comprising two rotatably mounted elongate rollers (1, 2), means for rotating the rollers, means (6, 7) for conveying vegetables along the said rollers, and at least one fluid directing means arranged to direct a fluid towards a vegetable being conveyed along the rollers so as to lift and remove leaves from the vegetable.

2. A device according to Claim 1, wherein a vegetable retaining means is mounted between the two rollers (1, 2).

3. A device according to Claim 2, wherein the vegetable retaining means is so mounted as to permit the position thereof relative to the rollers (1, 2) to be adjusted.

4. A device according to Claim 2 or 3, wherein the vegetable retaining means is mounted beneath the horizontal centre lines of each roller (1, 2).

5. A device according to any of Claims 2 to 4, wherein the vegetable retaining means comprises an elongate member.

6. A device according to Claim 5, wherein the elongate member is circular, polygonal, or diamond shaped in cross-section.

7. A device according to Claim 5 or 6, wherein the elongate member is substantially of the same length as the rollers (1, 2).

8. A device according to any of Claims 5 to 7, wherein the elongate member comprises a number of sections.

9. A device according to Claim 8, wherein the sections are so mounted on the device as to provide spaces between adjacent sections.

10. A device according to any of Claims 5 to 9, wherein the elongate member is a bar (12).

11. A device according to any of Claims 2 to 10, wherein the horizontal distance between the vertical axis of one of the rollers and the vertical axis of the vegetable retaining means is 80 to 100mm.

12. A device according to any preceding claim, wherein the two rollers (1, 2) are horizontally and/or vertically spaced apart.

13. A device according to any preceding claim, further comprising one or more deflectors (4, 5) mounted adjacent the rollers (1, 2), to prevent a vegetable falling therefrom.

14. A device according to any preceding claim, wherein the fluid directing means comprises at least one jet (3), the or each jet being mounted such that the angle of incidence of the fluid upon the vegetable may be varied.
